Europäisches Patentamt

European Patent Office

Office européen des brevets

(19)

(11)    EP 0 977 294 B1

(12)     **EUROPÄISCHE PATENTSCHRIFT**

(45) Veröffentlichungstag und Bekanntmachung des Hinweises auf die Patenterteilung:
**12.11.2003  Patentblatt 2003/46**

(51) Int Cl.⁷: **H01M 8/06**, H01M 8/24

(21) Anmeldenummer: **99810576.1**

(22) Anmeldetag: **02.07.1999**

(54) **Anlage mit Hochtemperatur-Brennstoffzellen**

High temperature fuel cells installation

Installation de piles à combustible fonctionnant à haute température

(84) Benannte Vertragsstaaten:
**AT BE CH CY DE DK ES FI FR GB GR IE IT LI LU MC NL PT SE**

(30) Priorität: **31.07.1998  EP 98810739**

(43) Veröffentlichungstag der Anmeldung:
**02.02.2000  Patentblatt 2000/05**

(73) Patentinhaber: **Sulzer Hexis AG
8400 Winterthur (CH)**

(72) Erfinder: **Schuler, Alexander, Dr.
8484 Weisslingen (CH)**

(74) Vertreter: **Sulzer Management AG
KS/Patente/0007,
Zürcherstrasse 12
8401 Winterthur (CH)**

(56) Entgegenhaltungen:
**EP-A- 0 398 111       EP-A- 0 443 241
EP-A- 0 551 054       EP-A- 0 635 896
EP-A- 0 673 074       EP-A- 0 780 917
WO-A-95/10126**

• **PATENT ABSTRACTS OF JAPAN vol. 011, no. 306 (E-546), 6. Oktober 1987 (1987-10-06) -& JP 62 098567 A (HITACHI LTD), 8. Mai 1987 (1987-05-08)**

**Beschreibung**

Die Erfindung betrifft eine Anlage mit Hochtemperatur-Brennstoffzellen gemäss Oberbegriff von Anspruch 1 sowie ein Verfahren zum Betreiben der Anlage.

Eine derartige Anlage umfasst eine Vorrichtung, wie sie aus der EP-A 0 780 917 (= P.6719) bekannt ist. Diese Vorrichtung enthält einen Zellenblock mit Brennstoffzellen, der von einer wärmedämmenden Hülle umgeben ist. Ein Nachverbrennungsraum befindet sich zwischen Hülle und Zellenblock. Ein Reformer für die Aufbreitung eines Brenngases (auch Prereformer genannt) ist in der Hülle angeordnet. Er ist mit einem Wärmetauscher verbunden, mittels dem ihm für die endothermen Reformierungsprozesse Wärme aus Abgasen zuführbar ist.

Bei der Reformierung des Brenngases, das in vielen Anwendungsfällen zur Hauptsache aus Methan besteht, wird dieses bei Anwesenheit von $H_2O$ und unter Zufuhr von Prozesswärme katalytisch zumindest teilweise in CO und $H_2$ umgesetzt. Statt eines gasförmigen Brennstoffes kann auch ein flüssiger vorgesehen werden, wobei allerdings die Verwendung eines flüssigen Brennstoffs mit zusätzlichen Problemen verbunden sein kann, indem dieser in geeigneter Weise in den Reformer eingespeist werden muss.

Es ist Aufgabe der Erfindung, eine Anlage mit Hochtemperatur-Brennstoffzellen zu schaffen, bei der die für die Reformierung des Brennstoffs benötigte Prozesswärme in einer für das Gesamtverfahren vorteilhaften Weise gewonnen und der Reformierung zugeführt wird. Diese Aufgabe wird durch die in Anspruch 1 definierte Anlage gelöst.

Die Anlage enthält Hochtemperatur-Brennstoffzellen, die planar ausgebildet in einem zentralsymmetrischen Stapel angeordnet sind. Eine Zuführstelle ist für einen gasförmigen oder flüssigen Brennstoff vorgesehen. In einem Reformer im Anschluss an die Zuführstelle ist der Brennstoff bei Anwesenheit von $H_2O$ und unter Zufuhr von Prozesswärme katalytisch zumindest teilweise in CO und $H_2$ umsetzbar. Längs der Stapelachse ist ein zentraler Hohlraum angeordnet, über den der im Reformer aufbereitete Brennstoff in die Brennstoffzellen einspeisbar ist. Der Reformer ist in dem zentralen Hohlraum angeordnet und so ausgebildet, dass die für die endothermen Reformierungsprozesse benötigte Wärme zumindest teilweise über Strahlung von den Brennstoffzellen auf den Reformer übertragbar ist.

Der Reformer der erfindungsgemässen Anlage wird im folgenden als integrierter Reformer bezeichnet.

Während bei bekannten Anlagen der Reformer separat ausserhalb des Zellenblocks angeordnet ist und mit Abgas beheizt wird, ist bei der erfindungsgemässen Anlage dieser separate durch den integrierten, strahlungsbeheizten Reformer ersetzt Die Wärme für die Reformierungsreaktionen wird über Strahlung direkt aus dem Brennstoffzellenstapel bereitgestellt. Dies bedeutet, dass die Zellen dadurch gekühlt werden, und zwar an der Stelle, an der diese bei bekannten Anlagen die höchste Temperatur aufweisen. Durch die Wärmesenke im Zellenstapel kann die notwendige Menge an Kühlluft zur Temperierung des Stapels reduziert werden. Durch die Verminderung der Luftmenge erhöht sich sowohl der elektrische Wirkungsgrad (weniger Gebläseleistung) als auch der Gesamtwirkungsgrad (weniger Abgasverlust). Dank einer Erhöhung der Abgastemperatur kann auch die Grösse eines zur Nutzung von Abwärme verwendeten Wärmetauschers reduziert werden.

Da die Wärmeübertragung durch Strahlung proportional zur vierten Potenz der absoluten Temperatur anwächst und da die Temperatur hoch ist (rund 1150 - 1200 K), stellen sich auch bei kleinen Temperaturdifferenzen hohe Wärmestromdichten ein.

Die abhängigen Ansprüche 2 bis 9 beziehen sich auf vorteilhafte Ausführungsformen der erfindungsgemässen Anlage. Gegenstand des Anspruchs 10 ist ein Verfahren zum Betreiben dieser Anlage.

Nachfolgend wird die Erfindung anhand der Zeichnungen erläutert. Es zeigen:

Fig. 1　　eine erfindungsgemässe Anlage mit Hochtemperatur-Brennstoffzellen, sehr schematisch dargestellt,

Fig. 2　　einen Ausschnitt der Anlage mit einer quergeschnittenen Brennstoffzelle,

Fig. 3　　eine zweite Ausführungsform einer Anlage mit Abgasrückführung,

Fig. 4　　eine Zuführstelle für flüssigen Brennstoff,

Fig. 5　　einen Ausschnitt einer gasdurchlässigen Struktur, die als Katalysatorträger eines Reformers für flüssige Brennstoffe verwendbar ist,

Fig. 6-8　　Seitenansicht und Details zu einem zweiten Ausführungsbeispiel für einen integrierten Reformer und

Fig.9, 10　　ein Element zu einem weiteren integrierten Reformer.

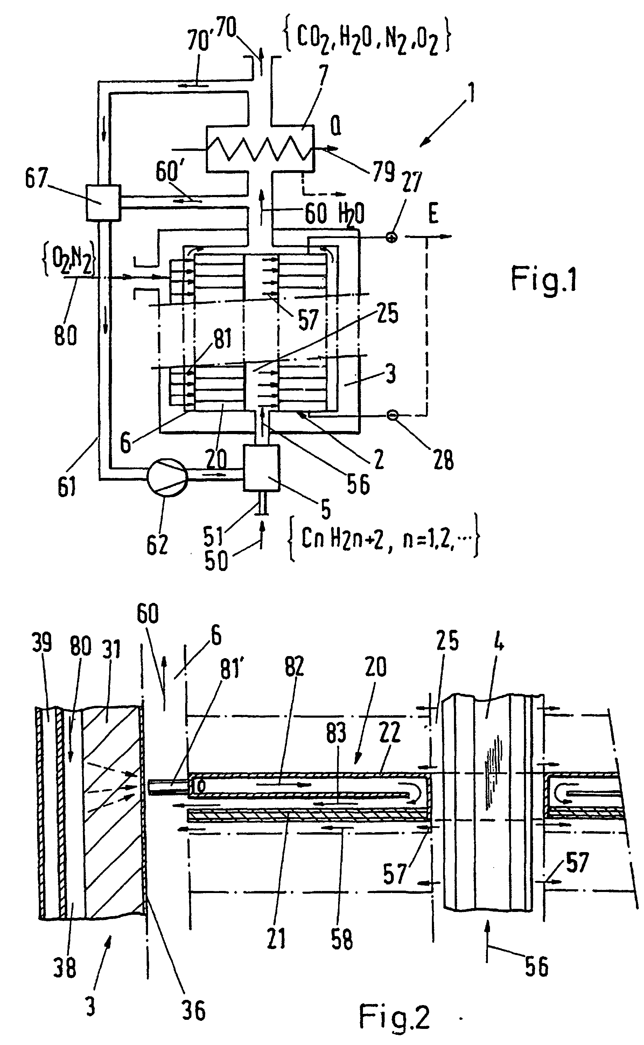

Die Anlage 1 der Fig. 1 umfasst folgende Komponenten: einen Stapel 2 mit planaren, ringförmigen Brennstoffzellen 20 und Polen 27, 28 zur Abgabe einer elektrischen Energie E; eine Hülle 3, die einen nicht dargestellten inneren Aufbau aufweist, mittels dem während des Betriebs Umgebungsluft 80, 81 vorgewärmt und gleichmässig verteilt dem Zellstapel 2 zugeführt wird; ein Nachverbrennungsraum 6 zwischen Zellstapel 2 und Hülle 3, aus dem Abgas 60, 70 über einen Wärmetauscher 7 (Abgabe von Heizwärme Q an ein Wärmeträgermittel 79 eines Wasserkreislaufs) abgeführt wird; ein Mischorgan 67, in dem heisses Abgas 60' mit abgekühltem Abgas 70' zusammengeführt wird, eine Rückführleitung 61 für das Abgas und ein Ventilator 62; ferner ein Anlagenteil 5, in dem Brennstoff 50 (Zuführleitung 51) mit dem rückgeführten Abgas der Leitung 61 vermischt wird. Im Anschluss an diese Zuführstelle 5 wird das Gemisch durch Reformierung aufbereitet und der aufbereitete Brennstoff 57 in die Zellen 20 eingespeist, die er als Gas 58 durchströmt.

Die Reformierung ist ein endothermer Prozess. Erfindungsgemäss wird ein integrierter Reformer 4 - siehe Fig. 2 - in einem zentralen Hohlraum 25 des Zellstapels 2 längs der Stapelachse angeordnet und so ausgebildet, dass von den Zellen 20 abgegebene Strahlungswärme durch ihn aufgenommen werden kann.

Fig. 2 zeigt weitere Details: Die Hochtemperatur-Brennstoffzelle 20 umfasst eine elektrochemisch aktive Platte 21 (mit zwei Elektrodenschichten und eine dazwischen liegende Feststoffelektrolytschicht) und einen Interkonnektor 22, der die elektrochemisch aktiven Platten 21 benachbarter Zellen 20 elektrisch leitend verbindet. Der Interkonnektor 22 ist als Wärmetauscher für die Aufheizung von durch Zuführleitungen 81' eingespeiste Luft 82 ausgebildet. Die aufgeheizte Luft 83 fliesst parallel zum Gas 58 radial nach aussen. Bestandteile des Gases 58, die in der Zelle 20 nicht reagiert haben, werden nach Vereinigung mit dem Luftstrom 83 im Nachverbrennungsraum 6 verbrannt. Der ringspaltförmige Raum 6 ist von einer luftdurchlässigen Wand 31, die auf der Innenseite mit einer Schicht 36 abgedichtet ist, umschlossen. Über einen zweiten ringspaltförmigen Raum 38 wird Luft 80 auf die Wand 31 verteilt, in dieser vorgewämt und durch die Leitungen 81' in die Interkonnektoren 22 eingespeist. Die Hülle, die die Wand 31 und Verteilerraum 38 umfasst, wird gegen aussen durch eine evakuierte, ringspaltförmige Kammer 39 abgeschlossen.

Beim Betreiben der Anlage 1 finden in den Brennstoffzellen 20 stromliefernde und Abgas sowie Abwärme bildende Prozesse statt. In den Reformer 4 rückgeführtes Abgas 60', 70' enthält $H_2O$, $CO_2$, $O_2$ und $N_2$. Die Reformierung des Brennstoffs 50, der Kohlenwasserstoffe z. B. $C_nH_{2+2n}$, mit n = 1, 2, ..., enthält, umfasst endotherme Reaktionen, wie

$$CH_4 + H_2O \rightarrow CO + 3\ H_2,$$

$$C_nH_{2n+2} + n\ H_2O \rightarrow n\ CO + (2n+1)\ H_2,$$

$$CH_4 + CO_2 \rightarrow 2\ CO + 2\ H_2.$$

Parallel zu diesen Reaktionen finden partielle Oxidationen, also exotherme Reaktionen,

$$C_nH_{2n+2} + n/2\ O_2 \rightarrow n\ CO + (n+1)\ H_2$$

statt. Die bei den partiellen Oxidationen frei werdende Wärme sowie Abwärme der stromliefemden Prozesse der Brennstoffzellen liefern die Prozesswärme für die Reformierung.

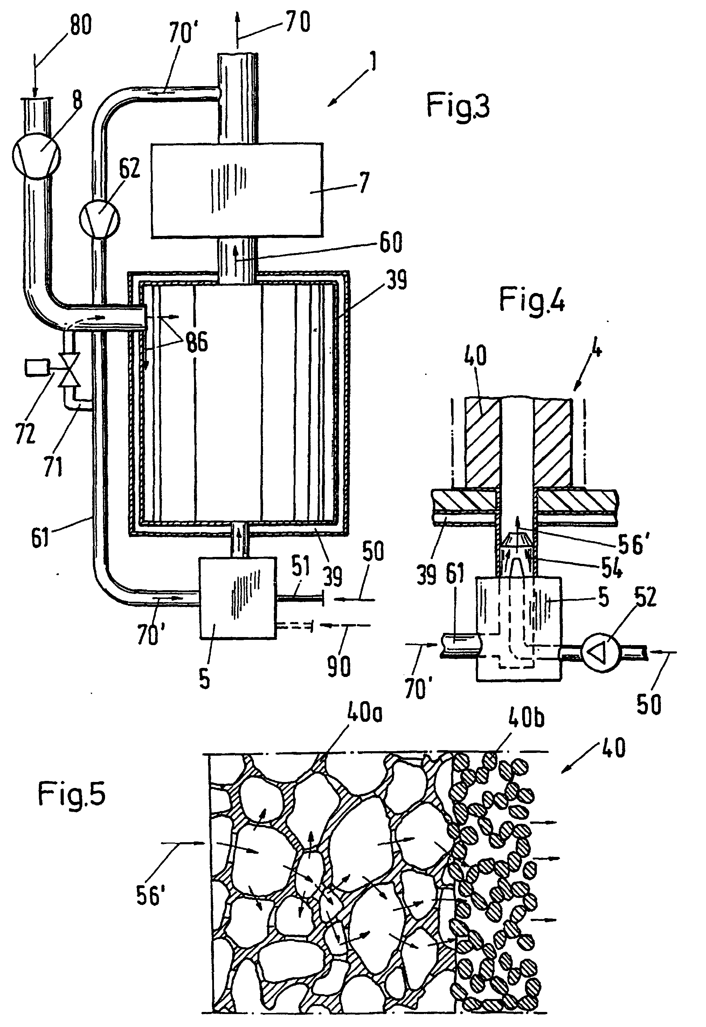

Fig. 3 zeigt eine Anlage 1, bei der ein Teil des rückgeführten Abgases 70' zur Umgebungsluft 80 zugemischt wird. Die mit einem Gebläse 8 geförderte Umgebungsluft 80 dient den stromliefernden Prozessen als $O_2$-abgebendes und als abwärmeaufnehmendes Medium. Die geförderte Menge liefert einen Überschuss an $O_2$ (bezogen auf die für die Prozesse benötigte stöchiometrische Menge).

Fig. 4 zeigt eine Zuführstelle 5 für einen flüssigen Brennstoff 50, der mit einer Pumpe 52 eingespeist wird. In einer Düseneinrichtung 54 wird der Brennstoff 50 versprüht und mit dem rückgeführten Abgas 70' (oder 70' und 60') vermischt. Das erzeugte Gemisch, ein Sprühnebel 56', wird in den Reformer 4 verteilt, der sich im zentralen Hohlraum 25 des Zellstapels 2 (siehe Figuren 1 und 2) befindet. Im rohrförmigen Reformer 4 wird der Sprühnebel 56' in einer gasdurchlässigen, Katalysatoren tragenden Struktur 40 aufbereitet (durch Reformierung und/oder partielle Oxidation). Diese Struktur 40, die als Ausschnitt in Fig. 5 dargestellt ist, umfasst in konzentrischer Anordnung eine innere Zone 40a und eine äussere Zone 40b. Die äussere Zone 40b ist gleichmässig ausgebildet und erzeugt einen wesentlich grösseren radialen Strömungswiderstand als die innere. Die innere Zone 40a ist als Tröpfchenabscheider ausgebildet. Dort geht die flüssige Phase des Brennstoffs 50 durch Verdampfung oder aufgrund von chemischen Reaktionen in Gasform über. In der äusseren Zone 40b wird die Aufbereitung fortgesetzt; gleichzeitig erfolgt durch die dichtere Zone 40b eine gleichmässige Verteilung des aufbreiteten Gases 57' auf die einzelnen Brennstoffzellen 20.

Als Katalysator für die Reformierung undloder die partielle Oxidation kommen beispielsweise folgende Stoffe in Frage: Platin, Palladium, Ruthenium, Rhodium und Nickel oder ein Gemisch von zwei oder mehr dieser Stoffe. Nickel ist allerdings für die partielle Oxidation wegen Russbildung weniger geeignet.

Bei schwer zu handhabenden Kohlenwasserstoffen (Benzin, Heizöl, Rapsöl) kann ein zusätzlicher Wassereinlass (Bezugszeichen 90 in Fig. 3) erforderlich sein, um die Gefahr der Kohlenstoffabscheidung, d.h. Russbildung, ausschalten zu können. Durch zusätzlichen Wassereinlass kann praktisch jedes beliebige Verhältnis der Reaktionen Reformierung und partielle Oxidation zueinander eingestellt werden. Da dieses Verhältnis je nach Brennstoff unterschiedlich ist, kann das Verfahren optimal auf den jeweiligen Brennstoff angepasst werden. Bei Brennstoffen, die nur wenig zur Russbildung neigen (Erdgas, Biogas, Methanol), kann auf eine zusätzliche Wasserversorgung verzichtet werden.

Der integrierte Reformer 4 der Figuren 2 und 4 erstreckt sich im wesentlichen über die gesamte Höhe des Zellenstapels 2. Mit einer gasdurchlässigen Struktur 40 umschliesst er einen rohrförmigen Verteilkanal. Diese Struktur 40 weist eine innere Oberfläche auf, die einen Katalysator, d. h. katalytische, die Reformierung aktivierende Stoffe, trägt. Der Reformer 4 ist derart ausgebildet, dass der Strömungswiderstand entlang dem Verteilkanal wesentlich geringer ist als radial durch die gasdurchlässige Struktur 40 und dass der radiale Strömungswiderstand im wesentlichen über die gesamte Reformerlänge gleich gross ist. Mit dieser Struktur 40 wird der aufbereitete, gasförmige Brennstoff 57 gleichmässig auf alle Zellen 20 verteilt.

Die gasdurchlässige Struktur 40, die ein poröses Rohr bildet, ist aus metallischem und/oder keramischem Material gefertigt. Dieses Rohr weist beispielsweise eine offenporige Schaumstruktur auf, wie sie in Fig. 5 für die innere Zone 40a vorgesehen ist.

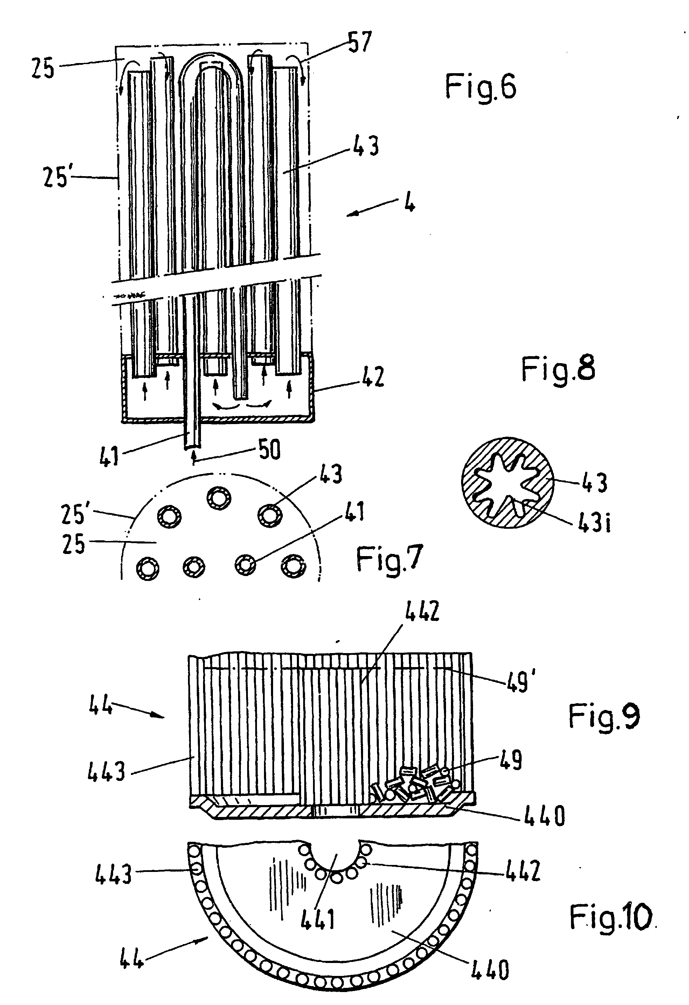

Der integrierte Reformer 4 kann beispielsweise auch als Bündel von vertikalen Rohren zusammengesetzt sein, wie es in den Figuren 6 und 7 dargestellt ist. Fig. 6 zeigt eine seitliche Ansicht des Rohrbündels, Fig. 7 einen Querschnitt. Die seitliche Begrenzung des zentralen Hohlraums 25 ist durch strichpunktierte Linien 25' angegeben. Während des Betriebs der erfindungsgemässen Anlage wird in einem haarnadelartig geformten Rohr 41 der eingespeiste, gasförmige Brennstoff 50 vorgewärmt. Danach wird das vorgewärmte Gas über einen Behälter 42 auf eine Mehrzahl von Rohren 43 verteilt. In diesen Rohren 43 finden die katalytischen Prozesse der Umsetzung statt. Damit für diese Prozesse eine ausreichend grosse Oberfläche zur Verfügung steht, können die Rohre 43 mit einer "fraktalen" inneren Oberfläche 43i ausgestattet werden, wie es in Fig. 8 angedeutet ist. Diese Oberfläche 43i kann mit einem die Katalysatoren tragenden Washcoat beschichtet sein.

Die Rohre 43 münden an ihren oberen Enden in der zentralen Hohlraum 25, über den das im Reformer 4 aufbereitete Gas 57 in die Brennstoffzellen 20 verteilt wird. Das Volumen des zentralen Hohlraums 25 soll wesentlich grösser als das Gesamtvolumen der Rohre 41, 43 sein, so dass sich eine weitgehend gleichmässige Verteilung des aufbereiteten Gases 57 auf die Brennstoffzellen 20 ergibt.

Wie die Figuren 9 und 10 illustrieren, kann der integrierte Reformer 4 aus Stapelelementen 44 zusammengefügt sein, wobei diese Stapelelemente insbesondere Körbe sind, die ein als Katalysatorträger ausgebildetes Granulat 49 enthalten. Ein Korb 44 umfasst einen Boden 440 mit einem zentralen Durchbruch 441. Das Granulat 49 wird innen und aussen durch vertikale Säulen 441 bzw. 442 gehalten. Es wird bis zum Niveau 49' in den Korb 44 eingeschüttet.

Der Reformer 4 braucht nur für einen Teil der Reformierung ausgelegt zu sein, wenn die gasseitigen Elektroden der Brennstoffzellen mit katalytisch wirksamen Stoffen ausgestattet sind, mittels derer die Reformierung weiterführbar ist.

Es liegt eine grosse Anzahl von frei wählbaren Parametern vor: Art des Materials für den Katalysatorträger, Art der katalytisch aktiven Beschichtung, Porosität des Trägers, Geometrie (äusserer und innerer Durchmesser des porösen Rohrs, Verhältnis zum Durchmesser des zentralen Hohlraums). Dies ermöglicht ein weites Anwendungsspektrum für unterschiedliche Brennstoffe und Betriebscharakteristiken. Durch die Wahl der Geometrie kann die übertragbare Wärmemenge in einem sehr weiten Bereich eingestellt werden.

Die beschriebenen Ausführungsbeispiele betreffen Anlagen, bei denen Abgas in den Reformer rückgeführt wird. Die Erfindung bezieht sich jedoch auch auf Anlagen, bei denen keine Abgasrückführung vorgesehen ist (wie dies bei der eingangs genannten EP-A 0 780 917 der Fall ist).

**Patentansprüche**

1. Anlage (1) mit Hochtemperatur-Brennstoffzellen (20), die planar ausgebildet in einem zentralsymmetrischen Stapel (2) angeordnet sind, mit einer Zuführstelle (5) für einen gasförmigen oder flüssigen Brennstoff (50), mit einem Reformer (4) im Anschluss an die Zuführstelle, in welchem der Brennstoff bei Anwesenheit von $H_2O$ und unter Zufuhr von Prozesswärme katalytisch zumindest teilweise in CO und $H_2$ umsetzbar ist, und mit einem längs der Stapelachse angeordneten zentralen Hohlraum (25), über den der im Reformer aufbereitete Brennstoff in die Brennstoffzellen einspeisbar ist, **dadurch gekennzeichnet, dass** der Reformer in dem zentralen Hohlraum angeordnet ist und dass der Reformer so ausgebildet ist, dass die für die endothermen Reformierungsprozesse benötigte Wärme zumindest teilweise über Strahlung von den Brennstoffzellen auf den Reformer übertragbar ist.

2. Anlage nach Anspruch 1, **dadurch gekennzeichnet, dass** der Reformer (4) sich im wesentlichen über die gesamte Höhe des Zellenstapels (2) erstreckt und mit einer gasdurchlässigen Struktur (40) einen rohrförmigen Verteilkanal umschliesst, dass diese Struktur eine innere Oberfläche aufweist, die einen Katalysator, d. h. katalytische, die Reformierung aktivierende Stoffe, trägt, und dass der Reformer derart ausgebildet ist, dass der Strömungswiderstand entlang dem Verteilkanal wesentlich geringer ist als radial durch die gasdurchlässige Struktur und dass der radiale Strömungswiderstand im wesentlichen über die gesamte Reformerlänge gleich gross ist.

3. Anlage nach Anspruch 2, **dadurch gekennzeichnet, dass** die gasdurchlässige Struktur (40) ein poröses Rohr ist, das aus metallischem und/oder keramischem Material gefertigt ist, wobei dieses Rohr insbesondere eine offenporige Schaumstruktur (40a) aufweist.

4. Anlage nach einem der Ansprüche 1 bis 3, **dadurch gekennzeichnet, dass** der Reformer (4) aus Stapelelementen (44) zusammengefügt ist, wobei diese Stapelelemente insbesondere Körbe sind, die ein als Katalysatorträger ausgebildetes Granulat (49) enthalten.

5. Anlage nach Anspruch 2 oder 3, **dadurch gekennzeichnet, dass** der Reformer (4) für einen flüssigen, als Sprühnebel (56') zugeführten Brennstoff (50) vorgesehen ist und dass die gasdurchlässige Struktur (40) eine äussere und eine innere konzentrische Zone (40b bzw. 40a) umfasst, wobei die äussere Zone einen wesentlich grösseren radialen Strömungswiderstand als die innere erzeugt und die innere Zone als Tröpfchenabscheider ausgebildet ist.

6. Anlage nach Anspruch 1, **dadurch gekennzeichnet, dass** der Reformer (4) aus einem Bündel von vertikalen Rohren (41, 43) besteht und dass das Volumen des zentralen Hohlraums (25) wesentlich grösser als das Gesamtvolumen der Rohre ist, so dass sich eine weitgehend gleichmässige Verteilung des im Reformer aufbereiteten Gases (57) auf die Brennstoffzellen (20) ergibt.

7. Anlage nach einem der Ansprüche 1 bis 6, **dadurch gekennzeichnet, dass** ein Nachverbrennungsraum (6) im Anschluss an Ausgangsstellen der Brennstoffzellen angeordnet ist und dass zwischen der Zuführstelle (5) für den Brennstoff (50) und dem Nachverbrennungsraum eine Rückführverbindung (61) besteht, über die Abgas (60', 70') zu der Zuführstelle rückführbar ist.

8. Anlage nach einem der Ansprüche 1 bis 7, **dadurch gekennzeichnet, dass** der Reformer (4) nur für einen Teil der Reformierung ausgelegt ist und dass die gasseitigen Elektroden der Brennstoffzellen (20) mit katalytisch wirksamen Stoffen ausgestattet sind, mittels derer die Reformierung weiterführbar ist.

9. Anlage nach einem der Ansprüche 1 bis 8, **dadurch gekennzeichnet, dass** der Katalysator einen der Stoffe Platin, Palladium, Ruthenium, Rhodium und Nickel umfasst oder ein Gemisch von zwei oder mehr dieser Stoffe ist.

10. Verfahren zum Betreiben einer Anlage gemäss einem der Ansprüche 1 bis 9, **dadurch gekennzeichnet, dass** bei einer Aufbereitung des Brennstoffs (50) dieser unter Absorption von durch die Brennstoffzellen (20) abgegebenen Strahlungswärme zumindest teilweise reformiert wird und dass mit einer Struktur (40), die als Katalysatorträger für die Reformierung dient, der aufbereitete Brennstoff weitgehend gleichmässig auf die einzelnen Brennstoffzellen verteilt wird.

**Claims**

1. Plant (1) with high temperature fuel cells (20) of planar design which are arranged in a centrally symmetrical stack (2), there being a supply point (5) for a gaseous or liquid fuel (50), a reformer (4) which is connected to the supply point and in which the fuel can be catalytically converted at least partially into CO and $H_2$ in the presence of $H_2O$ and with process heat being supplied, and a central cavity (25) which is arranged along the stack axis and via which the fuel which is prepared in the reformer can be fed into the fuel cells
**characterised in that** the reformer is arranged in the central cavity; and **in that** the reformer is designed in such a manner that the heat required for the endothermic reforming processes can be transferred at least partially via radiation from the fuel cells to the reformer.

2. Plant in accordance with claim 1 **characterised in that** the reformer (4) extends substantially over the entire height of the cell stack (2) and surrounds a tubular distributor channel with a gas-permeable structure (40); **in that** this structure has an inner surface which carries a catalyst, i.e. materials which catalytically activate the reforming; and **in that** the reformer is formed in such a manner that the flow resistance along the distributor channel is considerably less than radially through the gas-permeable structure; and **in that** the radial flow resistance is substantially equally large over the entire reformer length.

3. Plant in accordance with claim 2 **characterised in that** the gas-permeable structure (40) is a porous tube which is manufactured of a metallic and/or a ceramic material, with this tube in particular having an open-pored foam structure (40a).

4. Plant in accordance with one of the claims 1 to 3 **characterised in that** the reformer (4) is assembled from stack elements (44), with these stack elements in particular being baskets which contain a granulate (49) which is formed as a catalyst carrier.

5. Plant in accordance with claim 2 or claim 3 **characterised in that** the reformer (4) is provided for a liquid fuel (50) which is supplied as a spray mist (56');

and **in that** the gas-permeable structure (40) comprises an outer and an inner concentric zone (40b and 40a respectively), with the outer zone producing a substantially greater radial flow resistance than the inner one and the inner zone being formed as a droplet separator.

6. Plant in accordance with claim 1 **characterised in that** the reformer (4) consists of a bundle of vertical tubes (41, 43); and **in that** the volume of the central cavity (25) is substantially greater than the total volume of the tubes so that a substantially uniform distribution of the gas (57) which is prepared in the reformer onto the fuel cells (20) results.

7. Plant in accordance with one of the claims 1 to 6 **characterised in that** an afterburner chamber (6) is arranged in connection with output points of the fuel cells; and **in that** a feedback connection (61) exists between the supply point (5) for the fuel (50) and the afterburner chamber via which the exhaust gas (60', 70') can be fed back to the supply point.

8. Plant in accordance with one of the claims 1 to 7 **characterised in that** the reformer (4) is designed only for a part of the reforming; and **in that** the gasside electrodes of the fuel cells (20) are equipped with catalytically active materials by means of which the reforming can be continued.

9. Plant in accordance with one of the claims 1 to 8 **characterised in that** the catalyst comprises one of the materials platinum, palladium, ruthenium, rhodium and nickel or is a mixture of two or more of these materials.

10. Method for the operation of a plant in accordance with one of the claims 1 to 9 **characterised in that**, in a preparation of the fuel (50), the latter is at least partially reformed while absorbing radiation heat given off by the fuel cells (20); and **in that** the treated fuel is largely uniformly distributed over the individual fuel cells with a structure (40) which serves as a catalyst carrier for the reforming.

**Revendications**

1. Installation (1) avec des piles de combustible à température élevée (20) qui, en étant réalisées d'une manière plane, sont disposées dans une pile à symétrie centrale (2) avec un emplacement d'amenée (5) pour un combustible gazeux ou liquide (50), avec un reformeur (4) à la suite de l'emplacement d'amenée dans lequel le combustible, en présence de $H_2O$ et en amenant de la chaleur de traitement, peut être transformé catalytiquement au moins partiellement en CO et $H_2$ et avec un espace creux central (25) disposé le long de l'axe d'empilage, par lequel le combustible préparé dans le reformeur peut être introduit dans les piles de combustible, **caractérisée en ce que** le reformeur est disposé dans l'espace creux central, et **en ce que** le reformeur est réalisé de façon que la chaleur requise pour les processus de reformage endothermes peut être transmise au moins partiellement par rayonnement des piles de combustible au reformeur.

2. Installation selon la revendication 1, **caractérisée en ce que** le reformeur (4) s'étend sensiblement sur toute la hauteur de la pile de cellules (2) et entoure avec une structure (40) perméable aux gaz un canal de distribution tubulaire, **en ce que** cette structure présente une surface interne qui porte un catalyseur, c'est-à-dire des matières catalytiques activant le reformage, et **en ce que** le reformeur est réalisé de telle sorte que la résistance à l'écoulement le long du canal de distribution est considérablement plus réduite que radialement à travers la structure perméable aux gaz, et **en ce que** la résistance à l'écoulement radiale est de la même grandeur sensiblement sur toute la longueur du reformeur.

3. Installation selon la revendication 2, **caractérisée en ce que** la structure perméable aux gaz (40) est un tube poreux fabriqué en un matériau métallique et/ou céramique, où ce tube présente notamment une structure de mousse à alvéoles ouverts (40a).

4. Installation selon l'une des revendications 1 à 3, **caractérisée en ce que** le reformeur (4) est assemblé par des éléments d'empilage (44), où ces éléments d'empilage sont notamment des paniers qui contiennent un granulat (49) réalisé comme support de catalyseur.

5. Installation selon la revendication 2 ou 3, **caractérisée en ce que** le reformeur (4) est prévu pour un combustible liquide (50), amené comme embrun pulvérisé (56'), et **en ce que** la structure perméable aux gaz (40) comprend des zones concentriques extérieure et intérieure (40b respectivement 40a), où la zone extérieure produit une résistance radiale à l'écoulement sensiblement plus grande que la zone intérieure, et la zone intérieure est réalisée comme séparateur de gouttelettes.

6. Installation selon la revendication 1, **caractérisée en ce que** le reformeur (4) est constitué d'un faisceau de tubes verticaux (41, 43), et **en ce que** le volume de l'espace creux central (25) est nettement plus grand que le volume total des tubes de manière à obtenir une répartition sensiblement uniforme du gaz (57) préparé dans le reformeur sur les piles de combustible (20).

7. Installation selon l'une des revendications 1 à 6, **caractérisée en ce qu'**une enceinte de post-combustion (6) est disposée à la suite des emplacements de sortie des cellules de combustible, et **en ce qu'**il existe entre l'emplacement d'amenée (5) du combustible (50) et l'enceinte de post-combustion une liaison de retour (61) par laquelle les gaz d'échappement (60', 70') peuvent être ramenés à l'emplacement d'amenée.

8. Installation selon l'une des revendications 1 à 7, **caractérisée en ce que** le reformeur (4) est conçu seulement pour une partie du reformage, et **en ce que** les électrodes côté gaz des cellules de combustible (20) sont munies de matières catalytiquement efficaces au moyen desquelles le reformage peut être continué.

9. Installation selon l'une des revendications 1 à 8, **caractérisée en ce que** le catalyseur comprend l'une des matières platine, palladium, ruthénium, rhodium et nickel ou bien un mélange de deux ou plus de ces matières.

10. Procédé pour faire fonctionner une installation selon l'une des revendications 1 à 9, **caractérisé en ce que** lors d'une préparation du combustible (50), celui-ci, par l'absorption de la chaleur de rayonnement émise par les cellules de combustible (20), est au moins partiellement reformé, et **en ce qu'**au moyen d'une structure (40) qui sert de support catalyseur au reformage, le combustible préparé est reparti sensiblement uniformément sur les cellules de combustible individuelles.

Fig.1

Fig.2

Fig.3

Fig.4

Fig.5

Fig.6

Fig.8

Fig.7

Fig.9

Fig.10